# EUROPEAN PATENT SPECIFICATION

(11) **EP 1 472 488 B1**
(45) Date of publication and mention of the grant of the patent: **25.04.2007**
(21) Application number: 03703608.4
(22) Date of filing: 06.02.2003
(51) Int. Cl.: F16M 11/04, F16M 13/00

(54) **COLUMN**
STATIV
COLONNE SUPPORT

(30) Priority: 08.02.2002 SE 0200362
(43) Date of publication of application: 03.11.2004
(73) Proprietor: EFAB, ERIK FRISELL AB, 122 40 Enskede (SE)
(72) Inventor: FRISELL, Erik, S-122 40 Enskede (SE)
(74) Representative: Ellner, Lars O.
(86) International application number: PCT/SE2003/000193
(87) International publication number: WO 2003/067142

(56) References cited:
- EP-A1- 0 332 762
- DE-A- 10 044 213
- US-A- 4 964 606
- US-A- 5 490 655
- US-A- 5 551 658
- US-A- 5 938 161
- Brochure 'Kindermann Multimedia Präsentation 2001', Kindermann K-Vario C/W Deckenhalterungen für Daten-/Videoprojektoren, page 56

## Description

The present invention relates to a column for suspending a device provided with fastening elements from a ceiling or a similar substantially horizontal surface, comprising a mounting which is adapted to be attached to the ceiling and a pillar whose one end is connected to the mounting and whose other end is connected to a mounting plate, which is adapted to be releasably mounted on said device by means of its fastening elements.

The invention relates in particular to a column for suspending computer/video projectors and the like in a conference room, auditorium, board room, etc, to project pictures, for example, on a screen.

Ceiling-mounted projectors have become increasingly popular in recent years and new projector models are continuously introduced on the market. On the upper side of the projectors, there are usually a number of fastening elements, often three or four, by means of which the projector can be fastened to a mounting plate or mounting column, which may be referred to as a carriage. The carriage is in turn suspended via a pillar or the like from a mounting which is secured in the ceiling. The difficulty of mounting the projector on the carriage is that the positions of the fastening elements on the projector and the dimensions of the projector differ from one projector to another. This implies that the installer of the projector has to store and take with him a great number of different carriages to the customer with the hope that at least one of them will fit the customer's projector. The storage costs, possible new visits with a suitable carriage, modifications of existing carriages and returned items are costs that fall upon the customer.

Another problem, from an aesthetical point of view, is that the cabling of the projector hangs down more or less freely along the pillar and is unprotected from external forces.

US-A-5,938,161 discloses a suspension device for installing a projector pendant from a ceiling, which device comprises a ceiling mounting, a mounting plate and a pillar fixedly connected thereto. The mounting plate has four arched slots, through which fastening screws extend which can be tightened in corresponding bores on the upper side of the projector. The arched slots allow a certain degree of adjustment relative to the bores, but the positions of the bores are substantially determined by the location of the slots.

The object of the present invention is to provide a column for suspending a device provided with fastening elements from a ceiling or the like, said column having a mounting plate adapted to be fastened to said fastening elements irrespective of the positions of the fastening elements on the upper side of the device.

Another object of the invention is to provide a column which allows adjustable suspension of a device from a ceiling, in the vertical direction as well as at an angle to the ceiling.

It is a further object of the invention to provide a suspension column in which the cabling of a projector or the like suspended from the column is concealed.

These objects are achieved according to the invention by means of a column as defined by claim 1, the preamble of which is based on the brochure 'Kindermann Multimedia Präsentation 2001', Kindermann K-Vario C/W.

Further developments of the invention will be evident from the features stated in the dependent claims.

Preferred embodiments of the invention will now be described for the purpose of exemplification and with reference to the accompanying drawings, in which
Fig. 1 is a perspective side view illustrating a preferred embodiment of a column according to the invention;
Fig. 2 shows on a larger scale the upper portion of the column according to Fig. 1;
Fig. 3 shows on the same scale as in Fig. 2 the lower portion of the column according to Fig. 1;
Fig. 4 illustrates the suspension of a projector from the lower portion of the column;
Fig. 5 is a bottom plan view illustrating the mounting plate of the column with arms of various designs attached to its underside;
Figs 6 and 7 show two alternative designs of the arms of the column;
Fig. 8 illustrates the mounting of a pair of cover halves on the column;
Fig. 9 shows the cover halves when mounted on the column; and
Fig. 10 is a cross-sectional view of the snap connection of the cover halves.

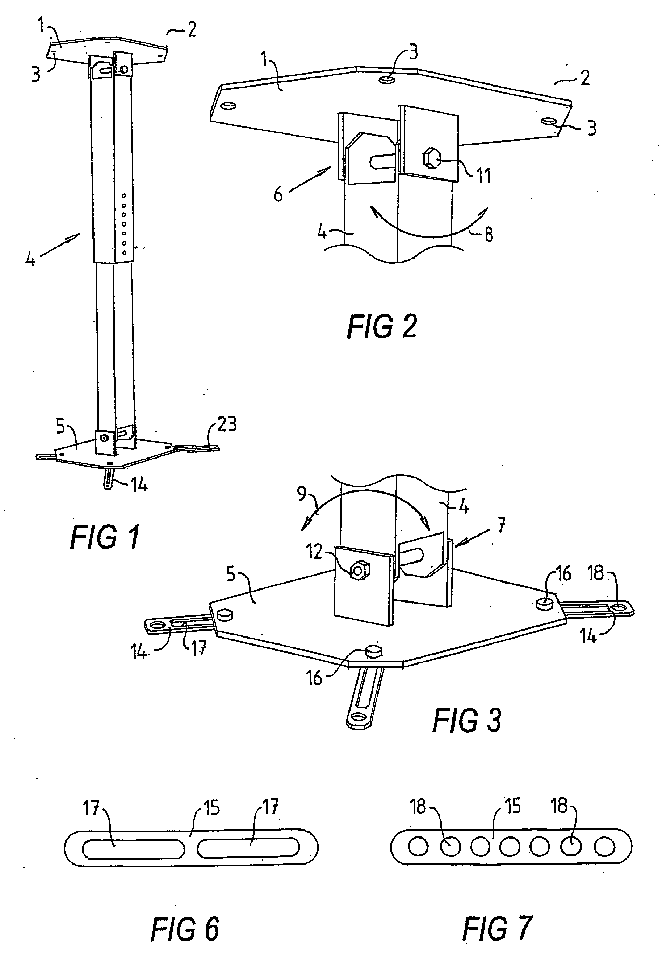

With reference first to Figs 1-3, the column according to the invention comprises a mounting 1, which is adapted to be attached to a ceiling 2 or a similar substantially horizontal surface by means of bolts or the like (not shown), which are inserted through respective bores 3 in the mounting 1. Moreover, the column comprises a pillar 4, whose one end is connected to the mounting 1 and whose other end is connected to a mounting plate or carriage 5. As illustrated in Fig. 1, the pillar 4 is preferably a telescopic construction known per se. Although the pillar 4 may be fixedly attached to the mounting 1 and the mounting plate 5, respectively, the pillar is preferably pivotally mounted thereon, as illustrated in Figs 2 and 3. Fig. 2 shows an example of a hinge 6 of the mounting 1 for receiving one end of the pillar 4 , and Fig. 3 shows a hinge 7 being of the same construction as the hinge 6 and arranged on the mounting plate 5 for receiving the other, opposite end of the pillar 4. It should be noted that the hinges 6 and 7 are rotated through 90° relative to each other, the pillar 4 being pivotable in a first plane, illustrated by the arrow 8, and the mounting plate 5 being pivotable in a second plane, illustrated by the arrow 9, perpendicularly to the first plane (cf. Fig. 1).

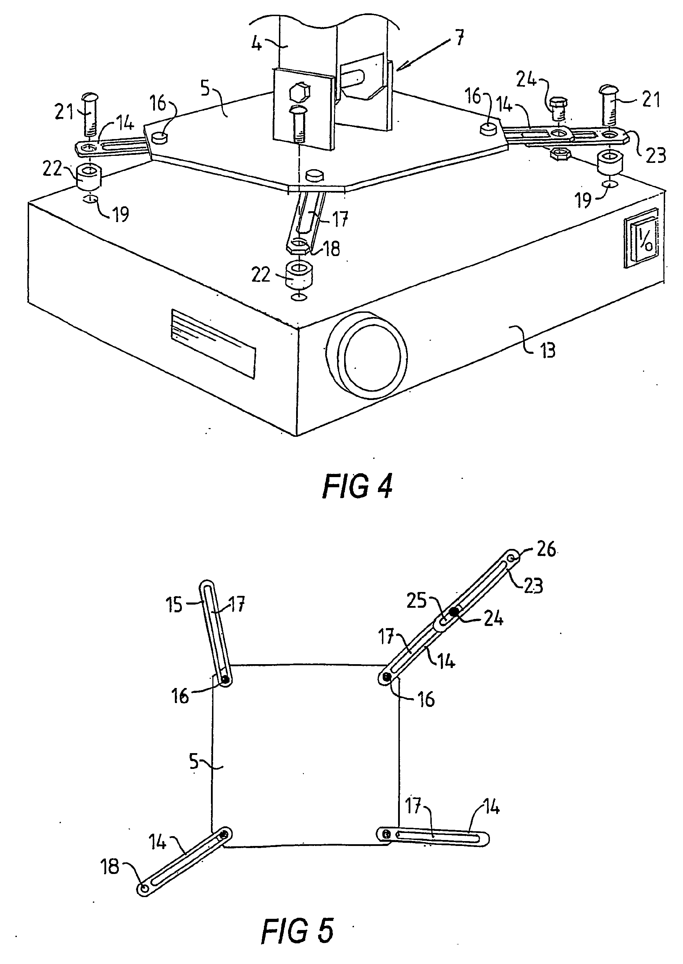

As shown in Figs 2 and 3, each hinge 6, 7 advantageously comprises a bolt and nut joint 11, 12 which functions as a pivot pin and which by being tightened can lock the pillar 4 at an optional angle to the mounting 1 and lock the mounting plate 5 at an optional angle to the pillar. Owing to this, the device 13 (the projector in Fig. 4) fastened to the mounting plate can be positioned at a desired angle in the room.

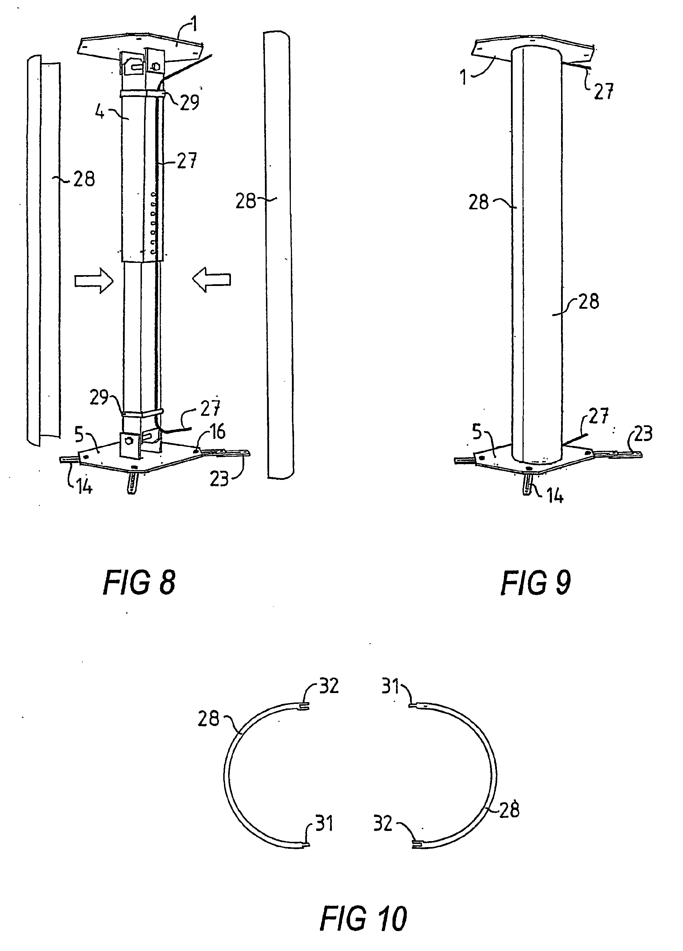

On the mounting plate 5, at least two, three or preferably four supporting arms 14, 15 are each pivotally mounted by means of a pin element 16, which is fixed to the mounting plate and extends through an elongate opening configuration in the respective supporting arms 14, 15 oriented in the longitudinal direction of the supporting arm, as illustrated in Figs 5-7. In this connection, the expression "opening configuration" refers to one or more through-slots 17 and/or through-holes 18 which are mutually aligned in the longitudinal direction of the respective supporting arms 14, 15. Thus, the supporting arm 15 has an opening configuration consisting of only one slot 17, whereas the opening configuration of the supporting arm 14 consists of a slot 17 and a hole 18 (see Fig. 5). Figs 6 and 7 show opening configurations consisting of a number of slots 17 and holes 18, respectively. Different combinations of the opening configurations presented are, of course, also conceivable and encompassed by the inventive idea.

All the supporting arms 14, 15 are pivotable in one or more planes which are parallel to the mounting plate 5 (cf. Figs 3 and 5). Furthermore, the supporting arms do not have to be flat in cross-section, but can also be, for example, U-shaped or the like.

Reference is now made to Fig. 4, which depicts the suspension of a projector 13 from the column according to the invention. On the upper side of the projector 13, a number of fastening elements 19 are arranged, the location of which on the projector often differs from one projector to another. In the illustrated projector 13, the fastening elements 19 are three spaced-apart, threaded holes. A fastening means 21, which is a bolt in the shown embodiment, is inserted into the opening configuration at each arm's end, which projects from the mounting plate 5, and is positioned straight above the associated fastening element 19 for engagement therewith, the projector thus being screwed onto the column. The positioning is carried out by the supporting arm 14, 15 being pivoted on the pin element 16 so that its longitudinal axis extends over the fastening element 19. Then the supporting arm 14, 15 is moved in its longitudinal direction and/or the fastening means 21 is moved in the slot 17 so that the fastening means 21 is placed straight above the fastening element 19 and can be screwed into the fastening element. When using the design of the supporting arm according to Fig. 7, a suitable hole 18 is selected for the fastening means 21. The latter supporting arm (or arms) can suitably be used together with one or more slotted supporting arms. A spacer means 22 in the form of a sleeve is advantageously arranged round the fastening means 21 between the supporting arm 14, 15 and the upper side of the projector 13. In cases when the fastening element 19 has the form of a bolt shank projecting from the upper side of the projector, the fastening element is arranged correspondingly in the opening configuration, whereupon the fastening means 21 in the form of a nut element is screwed onto the bolt end projecting through the opening configuration.

The column according to the invention also includes extension arms 23, which are releasably fastened to the supporting arms 14, 15 by means of screw joints 24 (see especially Figs 4 and 5). Each extension arm 23 has a through-opening 25 and 26, respectively, at its ends, one opening 25 receiving the screw joint 24, which also extends through the opening configuration of the supporting arm 14, 15 for screwing the extension arm 23 onto the supporting arm 14. The other opening 26 receives the fastening element 19 and/or the fastening means 21. The extension arms 23 are preferably designed substantially in the same way as the supporting arms 14, 15. The extension arms can, however, have two through-holes 18 only, one at each end.

As appears from Figs 3-5, the pin elements 16 are preferably positioned in the vicinity of the periphery of the mounting plate 5 and substantially equidistantly spaced apart.

Since the projector 13 is usually intended for use in a conference room, auditorium and the like, it is important to be able to shield the cabling 27 of the projector from the mounting 1, along the pillar 4 and through the mounting plate 5 to the projector 13. For this purpose, the column according to the invention comprises a pair of elongate, complementary cover halves 28, 28, which are preferably semi-circular in cross-section and of the same construction (as shown in Figs 8-10). The cover halves 28, 28 are designed so as to be interconnectable to surround the pillar 4 substantially from the mounting 1 to the mounting plate 5, thereby encasing the cabling 27, which is preferably fastened to the pillar 4 by a holding means 29, such as a band, wire, clips and the like. In this case, the long sides of the cover halves 28, 28 are suitably equipped with male and female members 31 and 32, respectively, intended for mutual engagement, as schematically shown in Fig. 10. Fig. 8 depicts how the cover halves 28, 28 are interconnected to encase the pillar 4 and the cabling 27, and Fig. 9 shows the column with the cover halves mounted. For modification or inspection of the cabling, the cover halves can easily be separated from each other and then interconnected again.

The invention is not limited to that described above or shown in the drawings and can be modified within the scope of the appended claims.

## Claims

1. A column for suspending a device (13) provided with fastening elements (19) from a ceiling or a similar substantially horizontal surface (2), comprising a mounting (1) which is adapted to be attached to the ceiling (2) and to a pillar (4) whose one end is connected to the mounting (1) and whose other end is connected to a mounting plate (5), which is adapted to be releasably mounted on said device (13) by means of its fastening elements (19), the column also comprises at least two supporting arms (14, 15) each having an elongate opening configuration (17, 18) which extends in the longitudinal direction of the supporting arms (14, 15), each supporting arm (14, 15) is movably supported by the mounting plate (5) by means of a separate pin element (16) which is fastened to the mounting plate (5) and which extends through the opening configuration (17, 18), the supporting arms (14, 15) all being pivotable in a plane parallel to the mounting plate (5), and the fastening elements (19) of said device (13) are received and secured in a portion of the opening configuration (17, 18) arranged at an end of the supporting arm (14, 15) which end projects from the mounting plate (5) and in cooperation with a fastening means (21) and/or by inserting a separate fastening means (21) into the opening configuration (17, 18) for locking engagement with the fastening element (19), the mutual distance between the fastening element (19) and the pin element (16) in the respective supporting arms (14, 15) being adjusted by appropriate positioning of the fastening element (19) and/or the pin element (16) in the opening configuration (17, 18) **characterised in that** it comprises extension arms (23) releasably fastened to the supporting arms (14, 15), each extension arm (23) having a through-opening (25, 26) at each end, one opening (25) and said opening configuration (17, 18) receiving a screw joint (24) for connecting the extension arm (23) to the supporting arm (14, 15) and the other opening (26) being intended for receiving and securing said fastening element (19) and/or for inserting a separate fastening means (21) for locking engagement with the fastening element (19).

2. A column as claimed in claim 1, **characterised in that** the opening configuration (17, 18) comprises a slot (17).

3. A column as claimed in claim 1, **characterised in that** the opening configuration (17, 18) comprises at least one slot (17) and/or one or more through-holes (18).

4. A column as claimed in claim 3, **characterised in that** the extension arms (23) have the same design as the supporting arms (14, 15).

5. A column as claimed in any one of claims 1-4, **characterised in that** one end of the pillar (4) is movably fastened (6) to said mounting (1), the pillar (4) being pivotable in a first plane, and that the other, opposite end of the pillar (4) is movably fastened (7) to the mounting plate (5), the mounting plate (5) being pivotable in a second plane which is perpendicular to the first plane.

6. A column as claimed in any one of claims 1-5, **characterised in that** the pillar (4) is telescopic.

7. A column as claimed in any one of claims 1-6, **characterised in that** the pin elements (16) are positioned in the vicinity of the periphery of the mounting plate (5) and are substantially equidistantly spaced apart.

8. A column as claimed in any one of the preceding claims, **characterised in that** it comprises a pair of elongate, cooperating cover halves (28, 28), which are adapted to be attached to each other and surround the pillar (4) and which extend substantially from the mounting (1) to the mounting plate (5).

9. A column as claimed in claim 8, **characterised in that** the pillar (4) has means (29) for holding cabling (27) to said device (13) on the pillar (4), encased by the cover halves (28, 28).

## Patentansprüche

1. Säule zum Aufhängen einer Vorrichtung (13), versehen mit Befestigungselementen (19) von einer Decke oder einer ähnlichen im Wesentlichen horizontalen Fläche (2) herab, das eine Halterung (1) umfasst, welche eingerichtet ist, um an die Decke (2) und an einem Ständer (4) befestigt zu werden, dessen eines Ende mit der Halterung (1) verbunden ist und dessen anderes Ende mit einer Montageplatte (5) verbunden ist, welche eingerichtet ist, um lösbar auf die Vorrichtung (13) montiert zu werden mittels ihrer Befestigungselemente (19), wobei die Säule ebenfalls zumindest zwei Tragearme (14, 15) umfasst, von denen jeder eine längliche Aussparungsanordnung (17, 18) besitzt, die sich in der Längsrichtung der Tragearme (14, 15) erstreckt, wobei jeder Tragearm (14, 15) beweglich durch die Montageplatte (5) getragen wird mittels eines separaten Stiftelements (16), das an der Montageplatte (5) befestigt ist und das sich durch die Aussparungsanordnung (17, 18) erstreckt, wobei die Tragearme (14, 15) alle drehbar sind in einer Ebene parallel zu der Montageplatte (5) und die Befestigungselemente (19) der Vorrichtung (13) bei einem Abschnitt der Aussparungsanordnung (17, 18) aufgenommen und gesichert werden, der an einem Ende des Tragearms (14, 15) angeordnet ist, dessen Ende aus der Montageplatte (5) herausragt und im Zusammenwirken mit einer Befestigungsvorrichtung (21) und/oder durch Einführung einer separaten Befestigungseinrichtung 21 in die Aussparungsanordnung (17, 18) in befestigendem Eingriff mit dem Befestigungselement (19) steht, wobei der gegenseitige Abstand zwischen dem Befestigungselement (19) und dem Stiftelement (16) bei den jeweiligen Tragearmen (14, 15) eingestellt wird durch geeignete Positionierung des Befestigungselements (19) und/oder des Stiftelements (16) in der Aussparungsanordnung (17, 18), **dadurch gekennzeichnet, dass** es Auslegerarme (23) umfasst, die lösbar an den Tragearmen (14, 15) befestigt sind, wobei jeder Auslegerarm (23) eine Durchgangsöffnung (25, 26) an jedem Ende besitzt, wobei eine Öffnung (25) und die Aussparungsanordnung (17, 18) ein Schraubenanschlussstück (24) zum Verbinden des Auslegerarms (23) mit dem Tragearm (14, 15) aufnimmt und die andere Öffnung (26) gedacht ist zur Aufnahme und Sicherung des Befestigungselements (19) und/oder zur Einführung einer separaten Befestigungseinrichtung (21) zum befestigenden Eingriff mit dem Befestigungselement (19).

2. Säule nach Anspruch 1, **dadurch gekennzeichnet, dass** die Aussparungsanordnung (17, 18) einen Schlitz (17) umfasst.

3. Säule nach Anspruch 1, **dadurch gekennzeichnet, dass** die Aussparungsanordnung (17, 18) zumindest einen Schlitz (17) und/oder ein oder mehrere Durchgangslöcher (18) umfasst.

4. Säule nach Anspruch 3, **dadurch gekennzeichnet, dass** die Auslegerarme (23) dasselbe Design wie die Tragearme (14, 15) besitzen.

5. Säule nach irgendeinem der Ansprüche 1-4, **dadurch gekennzeichnet, dass** ein Ende des Ständers (4) beweglich an der Halterung (1) befestigt (6) ist, wobei der Ständer (4) in einer ersten Ebene drehbar ist und dass das andere gegenüberliegende Ende des Ständers (4) beweglich an der Montageplatte (5) befestigt (7) ist, wobei die Montageplatte (5) in einer zweiten Ebene drehbar ist, welche senkrecht zu der ersten Ebene ist.

6. Säule nach irgendeinem der Ansprüche 1-5, **dadurch gekennzeichnet, dass** der Ständer (4) ineinanderschiebbar ist.

7. Säule nach irgendeinem der Ansprüche 1-6, **dadurch gekennzeichnet, dass** die Stiftelemente (16) nahe des Umfangs der Montageplatte (5) angeordnet sind und im Wesentlichen gleichen Abstand zueinander besitzen.

8. Säule nach irgendeinem der vorausgehenden Ansprüche, **dadurch gekennzeichnet, dass** es ein Paar von länglichen zusammenwirkenden Blenden-Halbelementen (28, 28) umfasst, die eingerichtet sind, um aneinander befestigt zu werden und den Ständer (4) zu umgeben und die sich im Wesentlichen von der Halterung (1) zu der Montageplatte (5) erstrecken.

9. Säule nach Anspruch 8, **dadurch gekennzeichnet, dass** der Ständer (4) eine Einrichtung zum Halten einer Verkabelung (27) zu der Vorrichtung (13) auf dem Ständer (4) besitzt, welche durch die Blenden-Halbelemente (28, 28) eingeschlossen wird.

## Revendications

1. Colonne pour suspendre un dispositif (13) pourvu d'éléments de fixation (19) depuis un plafond ou une surface similaire sensiblement horizontale (2), comprenant un support (1) qui est adapté pour être fixé au plafond (2) et à un montant (4) dont une extrémité est reliée au support (1) et dont l'autre extrémité est reliée à une plaque de montage (5), qui est adaptée pour être montée de manière amovible sur ledit dispositif (13) au moyen de ses éléments de fixation (19), la colonne comprend également au moins deux bras supports (14, 15), chacun ayant une configuration d'ouverture allongée (17, 18) qui s'étend dans le sens longitudinal des bras supports (14, 15), chaque bras support (14, 15) est supporté de manière mobile par la plaque de montage (5) au moyen d'un élément formant cheville séparé (16) qui est fixé à la plaque de montage (5) et qui s'étend à travers la configuration d'ouverture (17, 18), les bras supports (14, 15) étant tous orientables dans un plan parallèle à la plaque de montage (5), et les éléments de fixation (19) dudit dispositif (13) sont reçus et fixés dans une partie de la configuration d'ouverture (17, 18) agencée à une extrémité du bras support (14, 15) dont l'extrémité se projette depuis la plaque de montage (5) et en coopération avec un moyen de fixation (21) et/ou en insérant un moyen de fixation séparé (21) dans la configuration d'ouverture (17, 18) pour une mise en prise par blocage avec l'élément de fixation (19), la distance mutuelle entre l'élément de fixation (19) et l'élément formant cheville (16) dans les bras supports respectifs (14, 15) étant réglée par un positionnement approprié de l'élément de fixation (19) et/ou de l'élément formant cheville (16) dans la configuration d'ouverture (17, 18), **caractérisée en ce qu'**elle comprend des bras d'extension (23) fixés de manière amovible aux bras supports (14, 15), chaque bras d'extension (23) présentant une ouverture de passage (25, 26) à chaque extrémité, une ouverture (25) et ladite configuration d'ouverture (17, 18) recevant un assemblage par vis (24) pour relier le bras d'extension (23) au bras support (14, 15) et l'autre ouverture (26) étant destinée à recevoir et fixer ledit élément de fixation (19) et/ou à insérer un moyen de fixation séparé (21) en vue de la mise en prise par blocage avec l'élément de fixation (19).

2. Colonne selon la revendication 1, **caractérisée en ce que** la configuration d'ouverture (17, 18) comprend une fente (17).

3. Colonne selon la revendication 1, **caractérisée en ce que** la configuration d'ouverture (17, 18) comprend au moins une fente (17) et/ou un ou plusieurs trous de passage (18).

4. Colonne selon la revendication 3, **caractérisée en ce que** les bras d'extension (23) présentent la même conception que les bras supports (14, 15).

5. Colonne selon l'une quelconque des revendications 1 à 4, **caractérisée en ce qu'**une extrémité du montant (4) est fixée de manière mobile (6) au dit support (1), le montant (4) étant orientable dans un premier plan, et **en ce que** l'autre extrémité opposée du montant (4) est fixée de manière mobile (7) à la plaque de montage (5), la plaque de montage (5) étant orientable dans un second plan qui est perpendiculaire au premier plan.

6. Colonne selon l'une quelconque des revendications 1 à 5, **caractérisée en ce que** le montant (4) est télescopique.

7. Colonne selon l'une quelconque des revendications 1 à 6, **caractérisée en ce que** les éléments formant cheville (16) sont positionnés à proximité de la périphérie de la plaque de montage (5) et sont disposés sensiblement à équidistance.

8. Colonne selon l'une quelconque des revendications précédentes, **caractérisée en ce qu'**elle comprend une paire de moitiés de capot coopérantes et allongées (28, 28), qui sont adaptées pour être fixées l'une à l'autre et pour entourer le montant (4) et qui s'étendent sensiblement du support (1) à la plaque de montage (5).

9. Colonne selon la revendication 8, **caractérisée en ce que** le montant (4) présente des moyens (29) destinés à maintenir un câble (27) allant jusqu'au dispositif (13) sur le montant (4), revêtu des moitiés de capot (28, 28).
